# EUROPEAN PATENT SPECIFICATION

(11) **EP 3 291 392 B1**
(45) Date of publication and mention of the grant of the patent: **14.07.2021**
(21) Application number: 17186571.0
(22) Date of filing: 17.08.2017
(51) Int. Cl.: H02G 3/04

(54) **CABLE TRAY**
KABELTRASSE
CHEMIN DE CÂBLES

(30) Priority: 01.09.2016 ES 201631073
(43) Date of publication of application: 07.03.2018
(73) Proprietor: Unex Aparellaje Electrico S.L., 08903 L'Hospitalet de Llobregat (Barcelona) (ES)
(72) Inventor: MOSTAZO OVIEDO, José Antonio, 08903 L'Hospitalet de Llobregat (Barcelona) (ES)
(74) Representative: Curell Suñol S.L.P.

(56) References cited:
- EP-A2- 2 293 397
- WO-A2-2014/068382
- CN-A- 103 411 033
- CN-Y- 201 393 022
- FR-A1- 2 689 605
- FR-A1- 3 007 593
- GB-A- 2 494 426
- JP-A- 2006 175 462

## Description

### Field of the Invention

The invention is comprised in the field of cable trays for carrying conductor cables, such as electrical cables or optical fiber cables, for example.

More specifically, the invention relates to a cable tray of the type comprising:
- a raceway for cables having a U-shaped cross section, with a bottom wall and two side walls facing one another extending respectively from the two longitudinal sides of the bottom wall;
- at least one detachable lid which has a planar upper face and which is coupled to the side walls of the raceway, resting on an upper end of said side walls, such that said lid closes the open upper side of the raceway in at least one segment thereof;
- at least one anchoring part that is not part of the lid or the raceway and is fixed to said raceway such that it rests on said lid to secure the coupling thereof to the side walls.

### State of the Art

A problem found in cable trays of this type is that when the lid bears additional weight, for example in the event of the accumulation of snow thereon, it may experience sufficient bending to cause the accidental release thereof. To prevent this situation, or simply to prevent the lid from being accidentally released when it receives an impact, anchoring parts are placed distributed along the raceway.

The applicant has developed and marketed a system for cable trays in which the raceway is a one-piece profile having in its bottom wall openings regularly distributed along said raceway. The anchoring part goes around the entire height of the assembly formed by the raceway and the lid and is fixed to the raceway by means of a screw which is introduced in one of the openings of the bottom wall of said raceway. This system can only be applied to cable trays in which the raceway is provided with openings in its bottom wall, and furthermore the location of the anchoring part must coincide with one of these openings.

FR2689605A1 discloses a cable tray in which the upper face of the lid has a longitudinal groove and the anchoring part is a metallic clip provided with a lower wing that fits with a corresponding lip of the side wall of the raceway and an upper wing which is bent to form a groove that matches in the groove of the lid.

CN201393022Y discloses a cable tray comprising a lid and an anchoring part attached to said lid by a double-sided glued tape. The assembled so formed by the anchoring part and the lid glued together is coupled to the lateral walls of the raceway by means of two harpoon-shaped arms of said anchoring part that enter into openings of said lateral walls thanks to an elastic flexion of said arms, when the assembly of the lid and the anchoring part is pushed down against the raceway.

JP2006175462A discloses a lid intended to cover a trough which is laid on a side of a railroad. An anchoring part with harpooned ends is provided for securing the lid to the trough. The anchoring part is coupled to the lateral walls of the trough in a similar manner as in the previously mentioned document.

### Description of the Invention

The objective of the invention is to provide a cable tray of the type indicated above that does not have the limitations of the aforementioned cable trays of the state of the art. Another objective of the invention is for the anchoring part to be placed in an easier manner but not less secure in order to secure the coupling of the lid to the side walls of the raceway.

This objective is achieved by means of a cable tray as defined in claim 1.

This configuration according to the invention allows fixing the anchoring part in different positions along the raceway, regardless of whether or not the raceway has openings and regardless of the distribution thereof. The fixing of the anchoring part can be done in a quick and easy manner with one hand. To fix the anchoring part to the raceway, it must simply be introduced in a desired position along said raceway and pushed towards the latter with enough force to cause its elastic deformation and thereby obtain the press fitting thereof, without having to use fixing elements such as screws and the like. The anchoring part is thereby firmly fixed to the raceway as a result of the fitting of the lower wing in the lip, and particularly as a result of the elastic pressure exerted by the planar upper wing on the planar upper face of the lid. Furthermore, this elastic pressure exerted by the planar upper wing on the planar upper face of the lid provides a particularly firm securing of the coupling of the lid to the side walls of the raceway.

Based on the invention defined in the main claim, preferred embodiments the features of which are described in the dependent claims have been provided.

In some embodiments, the lid is coupled to the side walls of the raceway by means of said lid simply resting on said side walls, such that said lid itself is not fixed by pressure to said side walls. The invention thereby offers a simple and effective solution for securing the coupling of the lid to the side walls when the lid is made of a material, such as a resin, for example, that does not present sufficient elasticity so as to envisage press fixing said lid to said side walls.

In other embodiments, the lid is fixed by pressure to the side walls by means of snap-fitting flanges of said lid into a corresponding housing provided in each of said side walls. In this configuration, the lid is previously fixed by pressure to the side walls and the anchoring part is placed by press fitting to secure this fixing. The placement of the anchoring part can be done easily without any risk of causing the lid to shift.

The lip of the side wall with which the lower wing of the anchoring part fits extends along the entire length of the side wall in the longitudinal direction of the raceway, such that the press fitting of the anchoring part can be done in any position along the side wall. This configuration allows fixing the anchoring part in any position along the raceway in a quick and easy manner. Particularly, it allows placing, when appropriate, an anchoring part straddling two adjacent segments of lid in the same raceway.

In preferred embodiments, the lip of the side wall has at its end a planar lower face, each of the two longitudinal sides of the lid forms a flange of said lid having a planar side face, and the lower wing, the planar upper wing and the connecting segment of the anchoring part form an overall C-shaped section and respectively have planar inner faces. Furthermore, the anchoring part is sized such that in the press fitting thereof with the assembly formed by the side wall and the lid coupled thereto, the planar inner face of the lower wing is adjoined to the planar lower face of the lip of the side wall, the planar inner face of the connecting segment is adjoined to the planar side face of the flange of the lid and the planar inner face of said planar upper wing is adjoined to the planar upper face of the lid. This configuration provides a particularly secure fixing of the anchoring part to the raceway, as a result of it being adjoined by three planar faces in different planes to three corresponding planar faces of the side wall and the lid. Furthermore, this configuration provides a compact shape of the anchoring part, which can be small-sized since it only acts in the upper part of the side wall, and which is arranged tightly covering the entire coupling area of the lid with the side wall of the raceway, without having projections on which an external object may get snagged and cause the accidental release of the anchoring part.

Preferably, the planar upper wing of the anchoring part is provided, on at least one of its sides, with a recess that is flush with the inner face of the planar upper wing resting against the planar upper face of the lid. This recess allows introducing therein a flat tip of a tool to facilitate the elastic separation of the planar upper wing for the purpose of removing the anchoring part.

Preferably, the anchoring part is a one-piece part molded out of a polymeric material. More preferably, the polymeric material is an electrical insulator. It can be, for example, a thermoplastic such as PVC, polycarbonate or polypropylene, as well as a thermosetting resin. The device thus formed can advantageously be used in a cable tray likewise made of an electrically insulating polymeric material. Given that the anchoring part is placed without having to use any fixing element such as screws and the like, secure electrical protection is obtained making it unnecessary to ground the cable carrying installation.

Although the invention can be applied to cable trays in which the raceway is continuous and made up of a one-piece part, in the preferred embodiments the cable tray is a cable ladder, wherein the raceway is formed by two parallel side rails connected to one another by a plurality of parallel crosspieces spaced from one another, said plurality of cross-pieces forming a discontinuous seating surface for cables that constitutes the bottom wall of the raceway, which in this case is a discontinuous wall, and the side rails constitute the side walls of the raceway. A raceway of this type is described in document WO2016046436A1. Advantageously, the side rails and the crosspieces are profiles extruded from a polymeric material, preferably an electrically insulating polymeric material.

The invention also comprises other detail-related features illustrated in the following detailed description of an embodiment of the invention and in the attached drawings.

### Brief Description of the Drawings

The advantages and features of the invention can be seen from the following description in which preferred embodiments of the invention are described in reference to the drawings in a non-limiting manner with respect to the scope of the main claim.
Figure 1 is a perspective view of a segment of cable tray according to a first embodiment of the invention, in which the cable tray is a cable ladder type, comprising two adjacent lids coupled to the walls of the raceway, by means of said lids simply resting on said side walls, and four anchoring parts, two of which are depicted in assembled position and the other two in disassembled position.
Figures 2 and 3 are partial front views of the cable tray of Figure 1, with the anchoring part in the disassembled position and in the assembled position, respectively.
Figures 4, 5, 6 and 7 are a front view, a side view, a top view and a perspective view, respectively, of the anchoring part.
Figures 8, 9 and 10 are views similar to Figures 1, 2 and 3, showing a second embodiment of the invention which differs from the first embodiment only in that the lids are fixed by pressure to the side walls of the raceway by means of snap-fitting.

### Detailed Description of Embodiments of the Invention

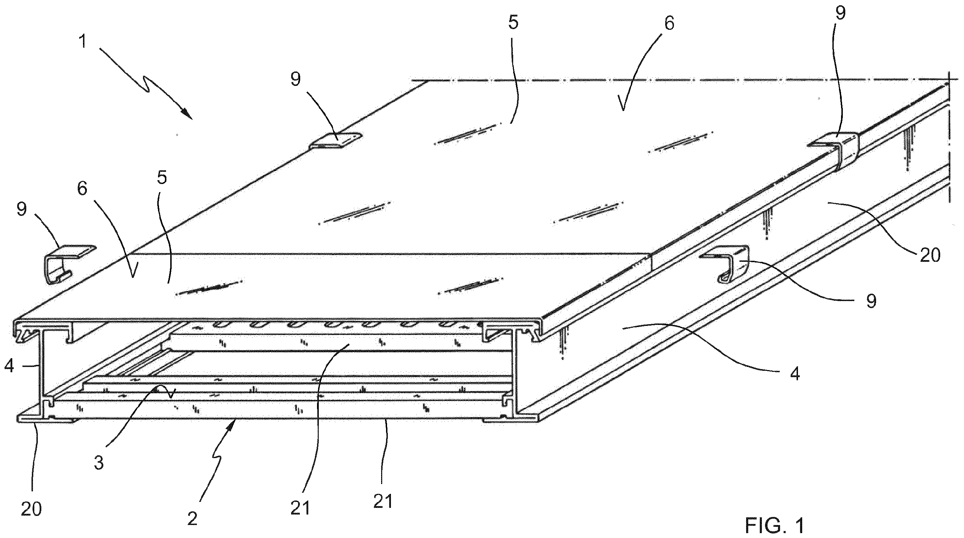

Figures 1 to 7 show a first embodiment of the cable tray according to the invention. The cable tray 1 is a cable ladder type, in which the raceway 2 for cables is formed by two parallel side rails 20 connected to one another by a plurality of parallel crosspieces 21 spaced from one another, such that the crosspieces 21 form a discontinuous seating surface for cables that constitutes the bottom wall 3 of the raceway 2, and the side rails 20 constitute side walls 4 of the raceway 2. The raceway 2 thus formed has a U-shaped cross section, with the two side walls 4 formed by the side rails 20 facing one another and extending respectively from the two longitudinal sides of the bottom wall 3 formed by the crosspieces 21.

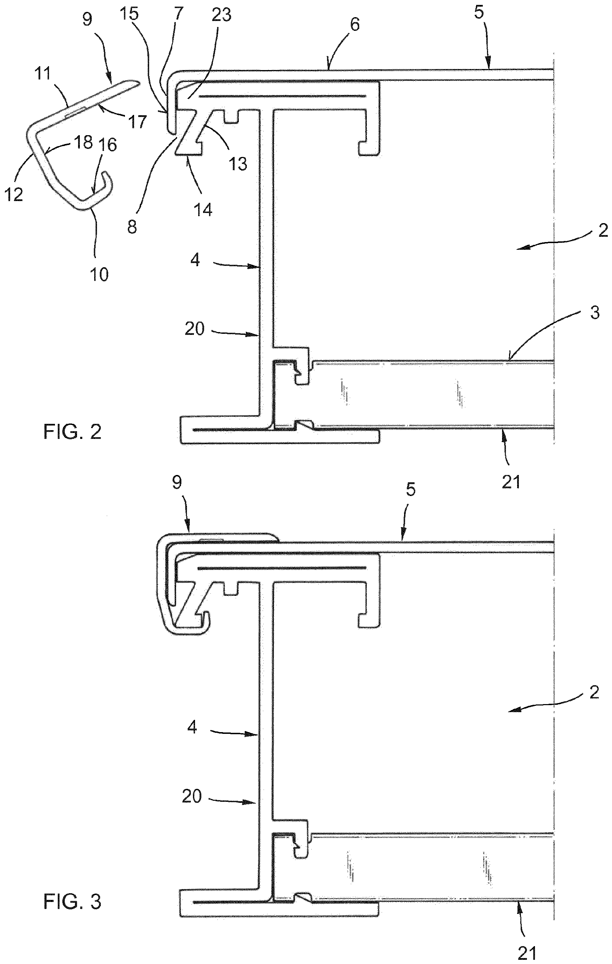

The segment of the cable tray 1 depicted in Figure 1 comprises two lids 5 which are placed adjacent to one another and are identical, except occasionally in their length. Each lid 5 closes the open upper side of the raceway 2 in the corresponding segment thereof and is coupled to the side walls 4 of the raceway 2. As can be seen in greater detail in Figure 2, the lid 5 has a planar upper face 6, and on each of its two longitudinal sides, a flange 7 with a planar side face 15. The lid 5 itself is not fixed by pressure to the side walls 4 of the raceway 2, but rather the coupling between the lid 5 and the side walls 4 consists of said lid 5 simply resting on said side walls 4. As can be seen in Figure 2, the lid 5 rests at the lower face of its horizontal upper wall on a planar upper face of an upper end of the side wall 4, and at the inner face of the flange 7 on the outer face of an edge 23 of said upper end of the side wall 4.

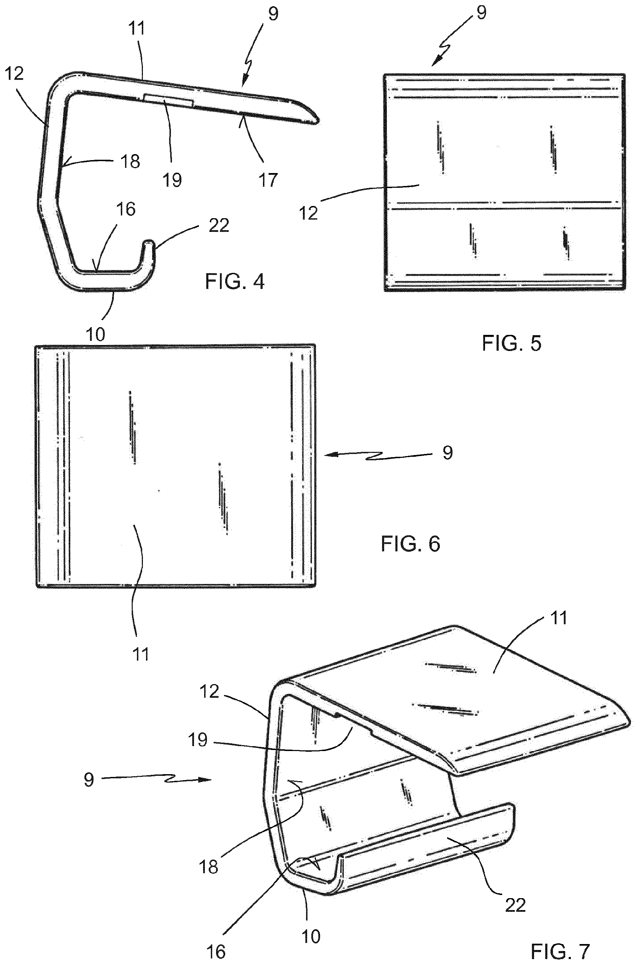

The coupling of the lid 5 to the side walls 4 of the raceway 2 is secured by means of anchoring parts 9, which are not part of the lid 5 or the raceway 2 and are placed in the desired position along the cable tray. As is shown in greater detail in Figures 4 to 7, each anchoring part 9 is a one-piece part having an overall C-shaped section, formed by a lower wing 10, a planar upper wing 11 facing said lower wing 10 and a connecting segment 12 between the two wings 10 and 11. The lower wing 10 has a bent end 22 giving it a hook shape. The inner faces 16, 17, 18 of the lower wing 10, the planar upper wing 11 and the connecting segment 12, respectively, are planar. The planar upper wing 11 extends in a slightly angled direction with respect to the lower wing 10, such that both wings 10 and 11 are slightly converging with respect to one another in the direction away from the connecting segment 12. The anchoring part 9 is capable of undergoing elastic bending to increase the separation between the wings 10 and 11, thereby transitioning from the standby position shown in Figure 4, in which the wings 10 and 11 are slightly converging, to the position shown in Figure 3, in which the two wings 10 and 11 are parallel and the anchoring part 9 is press fitted with the assembly formed by the side wall 4 and the lid 5 coupled thereto. In this fitting position of the anchoring part 9 shown in Figure 3, the hook-shaped lower wing 10 fits in an end of an inclined lip 13 of the side wall 4 extending from the edge 23 of the upper end of the side wall 4 and having a planar lower face 14. In turn, the planar upper wing 11 rests against the planar upper face 6 of the lid 5 and exerts elastic pressure thereon due to the effect of the elastic bending of the anchoring part 9. More precisely, the planar inner face 16 of the lower wing 10 is advantageously adjoined to the planar lower face 14 of the lip 13, the planar inner face 18 of the connecting segment 12 is adjoined to the planar side face 15 of the flange 7 of the lid 5 and the planar inner face 17 of the planar upper wing 11 is adjoined to the planar upper face 6 of the lid 5. The planar lower face 14 of the end of the lip 13 is parallel to the planar upper face 6 of the lid 5, and these two faces 14 and 6 are separated by a distance greater than the separation distance between the inner faces 16 and 17 of the anchoring part 9 in the standby position. This configuration causes elastic bending of the anchoring part in the fitted position, such that in this position the inner faces 16 and 17 are parallel to one another and are adjoined respectively to faces 14 and 6. Furthermore, a recess 19 flush with the planar inner face 17 of said planar upper wing 11 is formed on one side of the planar upper wing 11 of the anchoring part 9. To facilitate removing the anchoring part 9 from its fitted position, a flat screwdriver can be introduced in the recess 19 to separate the wings 10 and 11 from one another.

It is possible to press fit the anchoring part 9 in any position along the side wall 4 as a result of the lip 13 extending along the entire length of said side wall 4 in the longitudinal direction of the raceway 2. Particularly, it is possible to advantageously place the anchoring part 9 in the line where two adjacent lids 5 meet, such that it is arranged straddling the two lids 5.

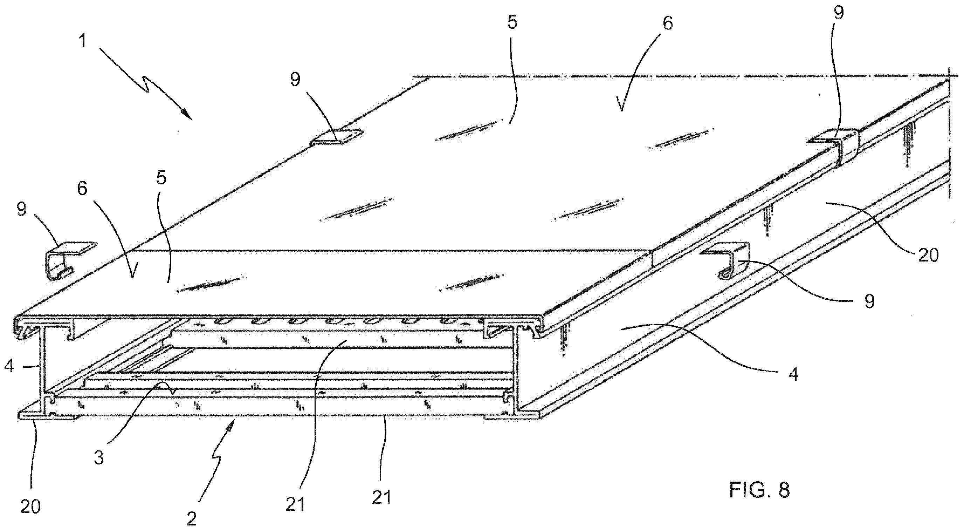

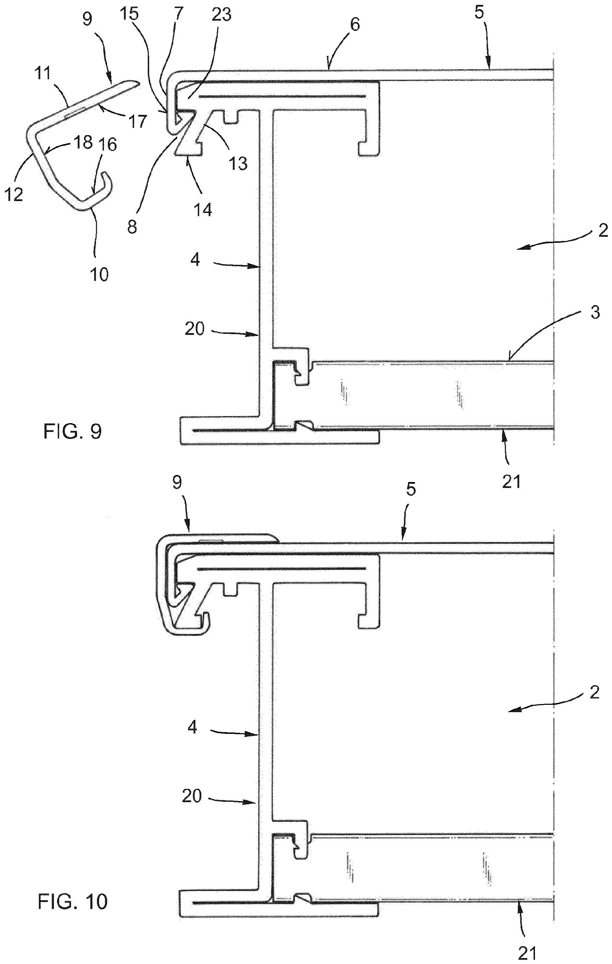

Figures 8 to 10 show a second embodiment of the cable tray according to the invention, which differs from the first embodiment only in that the lids 5 are configured for being fixed by pressure to the side walls 4 of the raceway 2 by means of snap-fitting each of the two flanges 7 of the lid 5 into a corresponding housing 8 formed in each of the side walls 4. In the depicted embodiment, the housing 8 is formed by a hollowing defined by the intersection between the edge 23 of the upper end of the side wall 4 and the inclined lip 13, and the flange 7 of the lid 5 has at its end a harpoon-shaped tip which is introduced into the housing 8 and resting against a lower face of the edge 23. The snap-fitting of the flange 7 into the housing 8 is performed as a result of the elastic deformation of said flange 7 that occurs when the lid 5 is pushed towards the raceway 2 until the harpoon-shaped tip is placed in the position shown in Figure 8. The fixing of the lid 5 by pressure to the side walls 4 of the raceway 2 is secured by means of the anchoring parts 9, which are the same as in the first embodiment and are placed in the same way and have the same advantages. It will be noted that the only difference between the two embodiments consists of the shape of the end of the flange 7 of the lid 5, which flange has a harpoon shape in the second embodiment and is introduced into the housing 8 to perform snap-fitting. It is possible to use lids 5 according to the first or the second embodiment interchangeably in one and the same raceway 2 and using the same fitting parts 9.

In the preferred embodiments depicted in the drawings, the anchoring part 9 is a one-piece part molded out of a polymeric material, and the side rails 20 and crosspieces 21 forming the raceway 2, as well as the lids 5, are profiles extruded from a polymeric material. Preferably, an electrically insulating material with a surface resistivity greater than 100 MΩ, such as PVC (polyvinyl chloride), for example, is chosen as the polymeric material. The polymeric material can be the same for all the parts, or different for each of them or for some of them.

## Claims

1. A cable tray (1), comprising:
- a raceway (2) for cables having a U-shaped cross section, with a bottom wall (3) and two side walls (4) facing one another extending respectively from the two longitudinal sides of said bottom wall (3);
- at least one detachable lid (5) which has an upper face (6) and is coupled to said side walls (4) of the raceway (2), resting on an upper end of said side walls (4), such that said lid (5) closes the open upper side of said raceway (2) in at least one segment thereof;
- at least one anchoring part (9) that is not part of said lid (5) or said raceway (2) and is fixed to said raceway (2) such that it rests on said lid (5) to secure the coupling of said lid (5) to said side walls (4) of the raceway (2);
wherein said anchoring part (9) comprises a hook-shaped lower wing (10), an upper wing (11) facing said lower wing (10) and a connecting segment (12) connecting said lower wing (10) and said upper wing (11), said anchoring part (9) being elastically deformable, such that it can undergo elastic deformation increasing the separation between said upper wing (11) and said lower wing (10), thereby allowing a press fitting of said anchoring part (9) with the assembly formed by said side wall (4) and said lid (5) coupled thereto, wherein said lower wing (10) fits with a corresponding lip (13) of said side wall (4) and said upper wing (11) exerts pressure on said upper face (6) of the lid (5) due to the effect of said elastic deformation of the anchoring part (9), said anchoring part (9) thereby being firmly fixed to said raceway (2) as a result of the fitting of said lower wing (10) with said lip (13) and the elastic pressure exerted by said upper wing (11) on said upper face (6) of the lid (5), and wherein said lip (13) extends along the entire length of said side wall (4) in the longitudinal direction of said raceway (2), such that said press fitting of said anchoring part (9) can be done in any position along said side wall (4);
**characterized in that** said upper face (6) of the lid (5) is planar and said upper wing (11) of the anchoring part (9) is planar, said planar upper wing (11) of the anchoring part (9) resting against said planar upper face (6) of the lid (5).

2. The cable tray (1) according to claim 1, **characterized in that** said lid (5) is coupled to said side walls (4) by means of said lid (5) simply resting on said side walls (4), such that said lid (5) itself is not fixed by pressure to said side walls (4).

3. The cable tray (1) according to claim 1, **characterized in that** said lid (5) is fixed by pressure to said side walls (4) by means of snap-fitting flanges (7) of said lid (5) into a corresponding housing (8) provided in each of said side walls (4).

4. The cable tray (1) according to any of claims 1 to 3, **characterized in that** said lip (13) has at its end a planar lower face (14), each of the two longitudinal sides of said lid (5) forms a flange (7) of said lid (5) having a planar side face (15), and said lower wing (10), said planar upper wing (11) and said connecting segment (12) of the anchoring part (9) form a an overall C-shaped section and respectively have planar inner faces (16, 17, 18), and **in that** said anchoring part (9) is sized such that, in said press fitting thereof with the assembly formed by said side wall (4) and said lid (5) coupled thereto, the planar inner face (16) of said lower wing (10) is adjoined to the planar lower face (14) of said lip (13) of the side wall (4), the planar inner face (18) of said connecting segment (12) is adjoined to the planar side face (15) of said flange (7) of the lid (5) and the planar inner face (17) of said planar upper wing (11) is adjoined to said planar upper face (6) of the lid (5).

5. The cable tray (1) according to any of claims 1 to 4, **characterized in that** said planar upper wing (11) of the anchoring part (9) is provided, on at least one of its sides, with a recess (19) that is flush with the inner face (18) of said planar upper wing (11) resting against said planar upper face (6) of the lid (5).

6. The cable tray (1) according to any of claims 1 to 5, **characterized in that** said anchoring part (9) is a one-piece part molded out of a polymeric material.

7. The cable tray (1) according to any of claims 1 to 6, **characterized in that** it is a cable ladder wherein said raceway (2) for cables is formed by two parallel side rails (20) connected to one another by a plurality of parallel crosspieces (21) spaced from one another, said plurality of cross-pieces (21) forming a discontinuous seating surface for cables that constitutes said bottom wall (3) of the raceway (2), and said side rails (20) constitute said side walls (4) of the raceway (2).

8. The cable tray (1) according to claim 7, **characterized in that** said side rails (20) and said crosspieces (21) are profiles extruded from a polymeric material.

## Patentansprüche

1. Ein Kabelträger (1), aufweisend:
- einen Kanal (2) für Kabel, welche einen L-Querschnitt aufweisen, mit einer Bodenwand (3) und zwei einander zugewandten Seitenwänden (4), die sich jeweils von den beiden Längsseiten der Bodenwand (3) aus erstrecken;
- mindestens einen abnehmbaren Deckel (5), der eine obere Fläche (6) aufweist und mit den Seitenwänden (4) des Kanals (2) gekoppelt ist, und auf einem oberen Ende der Seitenwände (4) ruht, sodass der Deckel (5) die offene Oberseite des Kanals (2) in mindestens einem Segment davon verschließt;
- mindestens ein Verankerungsteil (9), das nicht Teil des Deckels (5) oder des Kanals (2) ist und an dem Kanal (2) so befestigt ist, dass es auf dem Deckel (5) aufliegt, um die Kopplung des Deckels (5) an den Seitenwänden (4) des Kanals (2) zu sichern;
- wobei das Verankerungsteil (9) einen hakenförmigen unteren Flügel (10), einen oberen Flügel (11), welcher dem unteren Flügel (10) zugewandt ist, und ein Verbindungsegment (12), das den unteren Flügel (10) und den oberen Flügel (11) verbindet, aufweist, wobei das Verankerungsteil (9) elastisch verformbar ist, sodass es eine elastische Verformung erfahren kann, die den Abstand zwischen dem oberen Flügel (11) und dem unteren Flügel (10) vergrößert, wodurch eine Presspassung des Verankerungsteils (9) mit der durch die Seitenwand (4) und den damit gekoppelten Deckel (5) gebildeten Anordnung ermöglicht wird, wobei der untere Flügel (10) an einer korrespondierenden Lippe (13) der Seitenwand (4) anliegt und der obere Flügel (11) aufgrund der Wirkung der elastischen Verformung des Verankerungsteils (9) Druck auf die obere Fläche (6) des Deckels (5) ausübt, wobei das Verankerungsteil (9) dadurch fest an dem Kanal (2) als Ergebnis der Passung des unteren Flügels (10) mit der Lippe (13) und des elastischen Drucks, der durch den oberen Flügel (11) auf die obere Fläche (6) des Deckels (5) ausgeübt wird, befestigt ist, und wobei sich die Lippe (13) entlang der gesamten Länge der Seitenwand (4) in der Längsrichtung des Kanals (2) erstreckt, sodass die Presspassung des Verankerungsteils (9) in jeder Position entlang der Seitenwand (4) erzielt werden kann;
**dadurch gekennzeichnet, dass** die obere Fläche (6) des Deckels (5) eben ist und der obere Flügel (11) des Verankerungsteils (9) eben ist, wobei der ebene obere Flügel (11) des Verankerungsteils (9) an der ebenen oberen Fläche (6) des Deckels (5) anliegt.

2. Kabelträger (1) nach Anspruch 1, **dadurch gekennzeichnet, dass** der Deckel (5) mit den Seitenwänden (4) durch einfaches Anlegen des Deckels (5) an den Seitenwänden (4) gekoppelt ist, sodass der Deckel (5) selbst nicht durch Druck an den Seitenwänden (4) befestigt ist.

3. Kabelträger (1) nach Anspruch 1, **dadurch gekennzeichnet, dass** der Deckel (5) durch Druck an den Seitenwänden (4) mittels Schnappflanschen (7) des Deckels (5) in einer entsprechenden Aufnahme (8), die in jeder der Seitenwänden (4) vorgesehen ist, befestigt ist.

4. Kabelträger (1) nach einem der Ansprüche 1 bis 3, **dadurch gekennzeichnet, dass** die Lippe (13) an ihrem Ende eine ebene untere Fläche (14) aufweist, jede der beiden Längsseiten des Deckels (5) einen Flansch (7) des Deckels (5) mit einer ebenen Seitenfläche (15) bildet, und der untere Flügel (10) der ebene obere Flügel (11) und das Verbindungselement (12) des Verankerungsteils (9) einen insgesamt C-förmigen Querschnitt bilden und jeweils ebene Innenflächen (16, 17, 18) aufweisen, und dass das Verankerungsteil (9) so bemessen ist, dass bei seiner Presspassung mit der durch die Seitenwand (4) und den damit gekoppelten Deckel (5) gebildeten Anordnung die ebene Innenfläche (16) des unteren Flügels (10) an die ebene untere Fläche (14) der Lippe (13) der Seitenwand (4) angrenzt, die ebene Innenfläche (18) des Verbindungselements (12) an die ebene Seitenfläche (15) des Flansches (7) des Deckels (5) angrenzt und die ebene Innenfläche (17) des ebenen oberen Flügels (11) an die ebene obere Fläche (6) des Deckels (5) angrenzt.

5. Kabelträger (1) nach einem der Ansprüche 1 bis 4, **dadurch gekennzeichnet, dass** der flächige obere Flügel (11) des Verankerungsteils (9) an mindestens einer seiner Seiten mit einer Ausnehmung (19) versehen ist, die mit der Innenfläche (18) des flächigen oberen Flügels (11) an der flächigen Oberseite des Deckels (5) anliegt.

6. Kabelträger (1) nach einem der Ansprüche 1 bis 5, **dadurch gekennzeichnet, dass** das das Verankerungsteil (9) ein einstückiges Teil ist, das aus einem polymeren Material geformt ist.

7. Kabelträger (1) nach einem der Ansprüche 1 bis 6, **dadurch gekennzeichnet, dass** es sich um eine Kabelleiter handelt, wobei der Kanal (2) für Kabel durch zwei parallele Seitenschienen (20) gebildet wird, die durch eine Vielzahl von parallelen, voneinander beabstandeten Querstücken (21) miteinander verbunden sind, wobei die Vielzahl von Querstücken (21) eine diskontinuierliche Sitzfläche für Kabel bildet, die die Bodenwand (3) des Kanals (2) darstellt, und die Seitenschienen (20) die Seitenwände (4) des Kanals (2) bilden.

8. Kabelträger (1) nach Anspruch 7, **dadurch gekennzeichnet, dass** die Seitenschienen (20) und die Querstücke (21) Profile sind, die aus einem polymeren Material extrudiert sind.

## Revendications

1. Chemin de câbles (1), comprenant :
- un conduit (2) pour câbles présentant une section en coupe en forme de U, avec une paroi de fond (3) et deux parois latérales (4) se faisant mutuellement face s'étendant respectivement depuis les deux côtés longitudinaux de ladite paroi de fond (3) ;
- au moins un couvercle détachable (5) qui présente une face supérieure (6) et qui est accouplé auxdites parois latérales (4) du conduit (2), en appui sur une extrémité supérieure desdites parois latérales (4), de telle sorte que ledit couvercle (5) ferme le côté supérieur ouvert dudit conduit (2) dans au moins un segment de celui-ci;
- au moins une pièce d'ancrage (9) qui ne fait pas partie dudit couvercle (5) ou dudit conduit (2) et est fixée audit conduit (2) de telle sorte qu'elle s'appuie sur ledit couvercle (5) pour fixer l'accouplement dudit couvercle (5) auxdites parois latérales (4) du conduit (2) ;
dans lequel ladite pièce d'ancrage (9) comprend une aile inférieure en forme de crochet (10), une aile supérieure (11) faisant face à ladite aile inférieure (10) et un segment de liaison (12) reliant ladite aile inférieure (10) et ladite aile supérieure (11), ladite pièce d'ancrage (9) étant élastiquement déformable, de telle sorte qu'elle peut subir une déformation élastique augmentant la séparation entre ladite aile supérieure (11) et ladite aile inférieure (10), ce qui permet un ajustement par pression de ladite pièce d'ancrage (9) avec l'ensemble formé par ladite paroi latérale (4) et ledit couvercle (5) accouplé à celle-ci, dans lequel ladite aile inférieure (10) s'ajuste avec une lèvre (13) correspondante de ladite paroi latérale (4) et ladite aile supérieure (11) exerce une pression sur ladite face supérieure (6) du couvercle (5) en raison de l'effet de ladite déformation élastique de la pièce d'ancrage (9), ladite pièce d'ancrage (9) étant ainsi fermement fixée audit conduit (2) du fait de l'ajustement de ladite aile inférieure (2) avec ladite lèvre (13) et de la pression élastique exercée par ladite aile supérieure (11) sur ladite face supérieure (6) du couvercle (5), et dans lequel ladite lèvre (13) s'étend le long de toute la longueur de ladite paroi latérale (4) dans la direction longitudinale dudit conduit (2), de telle sorte que ledit ajustement par pression de ladite pièce d'ancrage (9) peut être effectué dans n'importe quelle position le long de ladite paroi latérale (4) ;
**caractérisé en ce que** ladite face supérieure (6) du couvercle (5) est plane et ladite aile supérieure (11) de la pièce d'ancrage (9) est plane, ladite aile supérieure plane (11) de la partie d'ancrage (9) s'appuyant contre ladite face supérieure plane (6) du couvercle (5).

2. Chemin de câbles (1) selon la revendication 1, **caractérisé en ce que** ledit couvercle (5) est accouplé auxdites parois latérales (4) par un simple appui dudit couvercle (5) sur lesdites parois latérales (4), de telle sorte que ledit couvercle (5) lui-même n'est pas fixé par pression auxdites parois latérales (4).

3. Chemin de câbles (1) selon la revendication 1, **caractérisé en ce que** ledit couvercle (5) est fixé par pression auxdites parois latérales (4) à l'aide de rebords d'encliquetage (7) dudit couvercle (5) dans un logement (8) correspondant prévu dans chacune desdites parois latérales (4).

4. Chemin de câbles (1) selon l'une quelconque des revendications 1 à 3, **caractérisé en ce que** ladite lèvre (13) présente à son extrémité une face inférieure plane (14), chacun des deux côtés longitudinaux dudit couvercle (5) forme un rebord (7) dudit couvercle (5) présentant une face latérale plane (15), et ladite aile inférieure (10), ladite aile supérieure plane (11) et ledit segment de liaison (12) de la pièce d'ancrage (9) forment une section en forme générale de C et présentent respectivement des faces intérieures planes (16, 17, 18), et **en ce que** ladite pièce d'ancrage (9) est dimensionnée de telle sorte que, lors dudit ajustement par pression de celle-ci avec l'ensemble formé par ladite paroi latérale (4) et ledit couvercle (5) accouplé à celle-ci, la face intérieure plane (16) de ladite aile inférieure (10) est attenante à la face inférieure plane (14) de ladite lèvre (13) de la paroi latérale (4), la face intérieure plane (18) dudit segment de liaison (12) est attenante à la face latérale plane (15) dudit rebord (7) du couvercle (5) et la face intérieure plane (17) de ladite aile supérieure plane (11) est attenante à ladite face supérieure plane (6) du couvercle (5).

5. Chemin de câbles (1) selon l'une quelconque des revendications 1 à 4, **caractérisé en ce que** ladite aile supérieure plane (11) de la pièce d'ancrage (9) est pourvue, sur au moins un de ses côtés, d'un enfoncement (19) qui est à fleur avec la face intérieure (18) de ladite aile supérieure plane (11) en appui contre ladite face supérieure plane (6) du couvercle (5).

6. Chemin de câbles (1) selon l'une quelconque des revendications 1 à 5, **caractérisé en ce que** ladite pièce d'ancrage (9) est une pièce monobloc moulée en un matériau polymère.

7. Chemin de câbles (1) selon l'une quelconque des revendications 1 à 6, **caractérisé en ce qu'**il s'agit d'une échelle à câbles, dans lequel ledit conduit (2) pour câbles est formé par deux rails latéraux parallèles (20) reliés l'un à l'autre par une pluralité de traverses parallèles (21) espacées les unes des autres, ladite pluralité de traverses (21) formant une surface d'appui discontinue pour les câbles qui constitue ladite paroi de fond (3) du conduit (2), et lesdits rails latéraux (20) constituent lesdites parois latérales (4) du conduit (2).

8. Chemin de câbles (1) selon la revendication 7, **caractérisé en ce que** lesdits rails latéraux (20) et lesdites traverses (21) sont des profilés extrudés à partir d'un matériau polymère.
